# EUROPÄISCHE PATENTANMELDUNG

(11) **EP 3 823 110 A1**
(43) Veröffentlichungstag der Anmeldung: **19.05.2021**
(21) Anmeldenummer: 20020519.3
(22) Anmeldetag: 11.11.2020
(51) Int. Cl.: H01R 24/86, H01R 13/6471

(54) **KONTAKTTRÄGER FÜR ELEKTRISCHE STECKVERBINDER UND STECKVERBINDER HIERFÜR**

(30) Priorität: 14.11.2019 AT 509872019
(71) Anmelder: Neutrik AG, 9494 Schaan (LI)
(72) Erfinder: Dobler, Oliver, 6774 Tschagguns (AT)
(74) Vertreter: Laminger, Norbert

(57) **Zusammenfassung**

Die Erfindung betrifft einen Elektrischer Steckverbinder, mit einem Gehäuse (1, 19, 36, 43) und einem im Inneren des Gehäuses gehaltenen Kontaktträger. Dieser umfasst jedenfalls einen elektrisch isolierenden Basisteil (8, 18) und zumindest ein Paar von ersten elektrischen Kontakten (4, 31) für die Energieübertragung und mehrere Paaren von zweiten elektrischen Kontakten (2, 30) für die Datenübertragung. Die Kontakte (2, 4, 30, 31) sind im Basisteil (8, 18) gehalten und in einer zur Längsachse der Kontaktelemente und des Kontaktträgers verlaufenden Ebene verteilt angeordnet. Erste Abstandslinien (50) zwischen den Kontakten (91, 92) der Paare von ersten Kontakten sind frei von Überschneidungen mit zweiten Abstandslinien (51, 52) zwischen den Kontakten der Paare (93, 94 bzw. 95, 96) von zweiten Kontakten.

## Beschreibung

Die Erfindung betrifft einen Kontaktträger für elektrische Steckverbinder gemäss dem Oberbegriff von Patentanspruch 1, sowie einen elektrischen Steckverbinder gemäss dem Oberbegriff von Patentanspruch 10.

Elektrische Steckverbinder mit einem Basisaufbau aus einem Gehäuse, einem Kontaktträger - entweder als separater Bauteil in das Gehäuse eingesetzt oder einstückig damit in dessen Innerem ausgeführt - und Kontakten für die Übertragung von elektrischer Energie und Datensignalen sind in verschiedenen Ausführungen bekannt. Zumindest ein erstes Paar von elektrischen Kontakten ist dabei für die Energieübertragung und mehrere zweite Paaren von elektrischen Kontakten sind für die Datenübertragung vorgesehen. Diese Steckverbinder, vor Allem deren Kontaktträger, sind in verschiedensten Ausführungsformen, d.h. mit unterschiedlicher Anzahl und Ausführung der Kontaktelemente, insbesondere der Kabelbuchsen, Kabelstecker, sowie mit verschiedenen Erdungs- und Anschlussvarianten verfügbar. Die Kontakte bzw. Kontaktelemente verbinden Daten- bzw. Energiekanäle, über die mit unterschiedlichen Spannungen und/oder Leistungen und/oder Frequenzen analoge und/oder digitale Daten oder Signale oder Energie übermittelt werden können.

Besonders verbreitet ist dabei der XLR-Typ. Stecker dieses Typs können als Kabelsteckverbinder an den Enden von Kabeln oder auch als Einbausteckverbinder zum Einbau in Geräte oder Schalttafeln od. dgl. ausgelegt sein. In beiden Varianten ist die Ausführung als männlicher Teil (Kabelstecker, Einbaustecker) oder weiblicher Teil (Kupplung bzw. Einbaubuchse oder Chassisbuchse) möglich. Die Ausführungsformen der Einbausteckverbinder können weiters auch noch zur Verbindung mit Leiterplatten bzw. Platinen ausgelegt sein, die in der Unterhaltungsindustrie Verwendung finden, und die horizontal - d.h. parallel zur Längsachse des Steckverbinders - oder vertikal - d.h. senkrecht auf die Längsachse - orientiert sein können. Bei der Version mit horizontaler Platine sind die aus dem Gehäuse an dessen Hinterseite herausgeführten Kontakte abgewinkelt, wobei die Verbindungsbereiche zur Leiterplatte in einer gemeinsamen Ebene an der Leiterplatte enden.

Der Kontaktträger selbst ist typischerweise bei allen genannten Ausführungsformen im Gehäuse des Steckverbinders aufgenommen oder integral damit ausgebildet. Er umfasst dabei einen elektrisch isolierenden Basisteil, der zumindest ein Paar von ersten elektrischen Kontakten für die Energieübertragung und mehrere Paaren von zweiten elektrischen Kontakten für die Datenübertragung trägt. Diese Kontakte sind durch Einkleben, Einpressen oder ähnliche Befestigungsmethoden im Basisteil gehalten und sind typischerweise in einer zur Längsachse der Kontaktelemente und des Kontaktträgers verlaufenden Ebene verteilt angeordnet. Sie verlaufen vorzugsweise parallel zueinander und zur Längsachse des Kontaktträgers.

Die WO 2010060370 A1 offenbart eine Steckverbindung für Ladesysteme für Elektrofahrzeuge. Die Stecker weisen sowohl einen Kontaktträger als auch ein Gehäuse, in welchem der Kontaktträger angeordnet ist. Der Kontaktträger weist eine Schulter für den Sitz im Gehäuse des Steckers auf. Die Steckkontakte sind dabei sowohl Energieübertragungs- als auch Signal- bzw. Datenkontakte, wobei eine getrennte räumliche Anordnung zwischen Energie- und Signal- bzw. Datenkontakten vorliegt, wobei aber keinerlei Verteilung zusammengehöriger Paare von Kontakten offenbart ist.

Die EP 0847107 A1 hat einen modularen Steckverbinder mit kreisförmigem Querschnitt zum Gegenstand. Der Kontaktträger ist modular zusammengesetzt aus mehreren Einzelmodulen, die gemeinsam einen zylindrischen Kontaktträger ergeben. In den Einzelmodulen sind in räumlich getrennter Anordnung jeweils Kontakte einer zusammengehörigen Kategorie zusammengefasst, wobei aber keinerlei Verteilung zusammengehöriger Paare von Kontakten innerhalb der Einzelmodule offenbart ist. Überdies ist im Gehäuse eine Führungsstruktur angelegt, in welche der Kontaktträger mit einer gegengleichen Struktur eingreift und damit genau positioniert gehalten ist.

Die CN 103560369 A offenbart einen Steckverbinder für LED Paneele, bei welchem die Kontakte in zwei Gruppen unterteilt sind und je eine Gruppe für die Leistungsübertragung und für die Signalübertragung ausgebildet sind. Die Anordnung der Kontakte für die Signalübertragung ragt etwas in die Anordnung der Kontakte für die Leistungsübertragung hinein, wobei aber keinerlei Verteilung zusammengehöriger Paare von Kontakten innerhalb der jeweiligen Anordnung von Leistungs- bzw. Signalkontakten offenbart ist.

Der Hybrid-Steckverbinder gemäss der DE 202015105928 U1 weist eine Aussenhülle auf, in welcher Isolierkörper zur Aufnahme eines eine Energieversorgung vermittelnden Energieleiters und eines zur Datenübermittlung dienenden Datenleiters angeordnet sind. Der Energieleiter weist zumindest zwei Energieadern und der Datenleiter wenigstens eine Datenader auf, die in gleicher Weise wie die Isolierkörper in räumlich getrennter Konfiguration vorliegen.

WO 2010060370 A1, EP 0847107 A1, CN 103560369 A und DE 202015105928 U1 offenbaren auch Ausnehmungen und Führungsstrukturen zwischen Gehäusen und Kontaktträgern.

Die der Erfindung zugrunde liegende Aufgabenstellung war einen Kontaktträger für Gehäuse von Steckverbindern bzw. Steckern mit einer grossen Anzahl an Daten- bzw. Energiekanälen, der eine möglichst störungsfreie Daten- und/oder Signal- und/oder Energieübertragung ermöglicht.

Zur Lösung dieser Aufgabe ist ein Kontaktträger gemäss einem der Ansprüche 1 bis 9 ausgeführt und ist ein elektrischer Steckverbinder gemäss einem der Ansprüche 10 bis 15 gestaltet.

Erfindungsgemäss ist der Kontaktträger dadurch gekennzeichnet, dass gedachte erste Abstandslinien zwischen den Kontakten der ersten Paare frei von Überschneidungen mit gedachten zweiten Abstandslinien zwischen den Kontakten der zweiten Paare sind.

Bevorzugt sind die Kontakte derart angeordnet, dass die zweiten Abstandslinien einander schneiden, vorzugsweise in einem rechten Winkel, wobei vorzugsweise eine Abstandslinie die Längsachse des Kontaktträgers schneidet und die andere Abstandslinie senkrecht zu dieser und vorzugsweise in der der Längsachse des Kontaktträgers abgewandten Hälfte verläuft.

Weiters bevorzugt ist der Abstand zwischen den Kontakten zusammengehöriger Paare grösser als jeder Abstand zu einem Kontakt eines anderen Paares.

Alternativ dazu oder auch ergänzend kann optional der der Abstand zwischen einem ersten Kontakt und dem nächstliegenden Kontakt eines Paares von zweiten Kontakten kleiner sein als der Abstand des ersten Kontaktes zum nächstliegenden Kontakt der gleichen Gruppe von Kontakten. Dabei liegt gleichzeitig der Abstand zwischen Kontakten nicht zusammengehöriger zweiter Paare zwischen den vorgenannten Abstandswerten.

Gemäss einer besonders bevorzugten Ausführungsform der Erfindung ist der Kontaktträger dadurch gekennzeichnet, dass der Abstand zwischen den nächstliegenden Kontakten unterschiedlicher Paare zweiter Kontakte derart gross ist, dass die charakteristische Impedanz zwischen diesen Kontakten grösser als 50 Ω ist, vorzugsweise grösser als 80 Ω ist.

Eine weitere erfindungsgemässe Ausführungsform sieht für den Kontaktträger vor, dass die zweiten Kontakte für die analoge und/oder digitale Datenübertragung in einer Spannungsebene einer Kleinspannung, die bei einer Wechselspannung ≤ 50 V und bei oberschwingungsfreier Gleichspannung ≤ 120 V beträgt ausgelegt sind, bevorzugt in einem Bereich von 0,5 V bis 25 V Wechsel- oder Gleichspannung, und/oder dass die ersten Kontakte für die Energieübertragung für den Einsatz in der Spannungsebene Niederspannung, also einer Wechselspannung > 50 V bis ≤ 1000 V und einer oberschwingungsfreien Gleichspannung > 120 V bis ≤ 1500 V, bevorzugt jedoch in einem Spannungsbereich zwischen 200 und 500 V Wechselspannung bzw. 200 V bis 300 V oberschwingungsfreier Gleichspannung, ausgelegt sind.

Ein optionales Merkmal der Erfindung liegt auch darin, dass am äusseren Umfang des Basisteils zumindest ein Führungselement angeordnet und zum Eingriff in eine komplementäre Führungsstruktur am aufnehmenden Gehäuse gestaltet ist.

Ein weiteres optionales Merkmal ist es, dass an der Rückseite des Basisteils über zumindest einen Teil des Umfanges eine Schulter ausgebildet ist, und dass vorzugsweise auch an der Vorderseite des Basisteils über zumindest einen Teil des Umfanges eine Schulter ausgebildet ist.

Insbesondere in der XLZ-Variante, bei welcher der Kontaktträger einen Basisteil aufweist, der im Wesentlichen als Scheibe oder Zylinder ausgebildet ist, wobei die Mittelachse der Scheibe bzw. des Zylinders und die Kontakte im Wesentlichen parallel angeordnet sind, ist eine erfindungsgemässe Variante dadurch gekennzeichnet, dass die Kontakte in einem Zylindersegment mit einer Segmenthöhe von mehr als einem Zylinderradius angeordnet sind, und im anderen Zylindersegment eine sich über zumindest einen Teil der Höhe des Zylinders bzw. der Scheibe erstreckende Ausnehmung ausgearbeitet ist.

Zur Lösung der eingangs gestellten Aufgabe ist ein elektrischer Steckverbinder dadurch gekennzeichnet, dass der Kontaktträger gemäss einem der vorhergehenden Absätze ausgeführt ist.

Dabei ist bevorzugt vorgesehen, dass an der Innenseite des Gehäuses zumindest ein Positionieranschlag und eine Führungsstruktur vorgesehen sind, wobei der Kontaktträger bei geschlossenem Gehäuse mit der Schulter an der Vorderseite des Basisteils am Positionieranschlag anliegt und zumindest bei geschlossenem Gehäuse, vorzugsweise bereits während des Einsetzens in das Gehäuse, das am äusseren Umfang des Basisteils angeordnete Führungselement in die Führungsstruktur eingreift.

Ein derartiger Steckverbinder, der ein radial zusammendrückbares und ein an die Kontakte angeschlossenes Kabel umfassendes Spannteil aufweist, das in zusammengedrücktem Zustand das Kabel klemmt, ist gemäss der vorliegenden Erfindung optional dadurch gekennzeichnet, dass der Spannteil mit an seiner Vorderseite angeordneten Vorsprüngen an der Schulter an der Hinterseite des Basisteils des Kontaktträgers angreift und bei geschlossenem Gehäuse in Richtung Einstecköffnung mit einer Kraft beaufschlagt.

Bevorzugt ist dabei das Gehäuse zur Herstellung einer Gewindeverbindung mit einer Spannhülse ausgelegt, wobei bei festgezogener Gewindeverbindung die Spannhülse das Spannteil, das Gehäuse und das Kabel miteinander verspannt sind, so dass der Spannteil als Zugentlastung auf das angeschlossene Kabel wirkt.

Optional kann als weiteres Erfindungsmerkmal ein Sperrteil oder Gehäusedeckel die Hinterseite des Gehäuses verschliessen und in geschlossenem und fixiertem Zustand an der Hinterseite des Kontaktträgers anliegen und in Richtung Einstecköffnung mit einer Kraft beaufschlagen. Ein Gehäusedeckel kann vorzugsweise für den luftdichten Verschluss des Steckverbinders ausgelegt und mit diesem luftdicht verbunden sein, was insbesondere für Lautsprecheranwendungen sehr wichtig ist.

Vorteilhafterweise kann bei entsprechend vorbereiteten Steckerverbindern als weiteres Merkmal eine manuell lösbare Verriegelungsanordnung in der Ausnehmung des Basisteils eingesetzt sein.

In der nachfolgenden Beschreibung soll die Erfindung anhand von mehreren Ausführungsbeispielen und unter Bezugnahme auf die Zeichnungen näher erläutert werden.

Es zeigen jeweils in stark vereinfachter, schematischer Darstellung:
- Fig. 1: eine perspektivische Ansicht eines erfindungsgemässen XLR-Kabelsteckers in Richtung der Stecköffnung;
- Fig. 2: einen Längsschnitt durch den Kabelstecker der Fig. 1 aus Richtung des Pfeils II;
- Fig. 3: einen Längsschnitt durch den Kabelstecker der Fig. 1 aus Richtung des Pfeils III;
- Fig. 4: eine perspektivische Ansicht eines erfindungsgemässen Kontaktträgers in männlicher Ausführung für einen XLR-Kabelstecker;
- Fig. 5: den Kontaktträger der Fig. 4 in einer perspektivischen Ansicht von hinten;
- Fig. 6: eine perspektivische Ansicht einer bei einem XLR-Kabelstecker eingesetzten Spannteil-Kontaktträger-Anordnung mit einem Kontaktträger entsprechend Fig. 4;
- Fig. 7: den Kontaktträger der Fig. 4 von hinten, eingesetzt im Gehäuse des Kabelsteckers;
- Fig. 8: eine perspektivische Ansicht einer erfindungsgemässen Kabelkupplung im XLR-Format;
- Fig. 9: einen Längsschnitt durch die Kupplung der Fig. 8 aus Richtung des Pfeils V;
- Fig. 10: einen Längsschnitt durch die Kupplung der Fig. 8 aus Richtung des Pfeils VI;

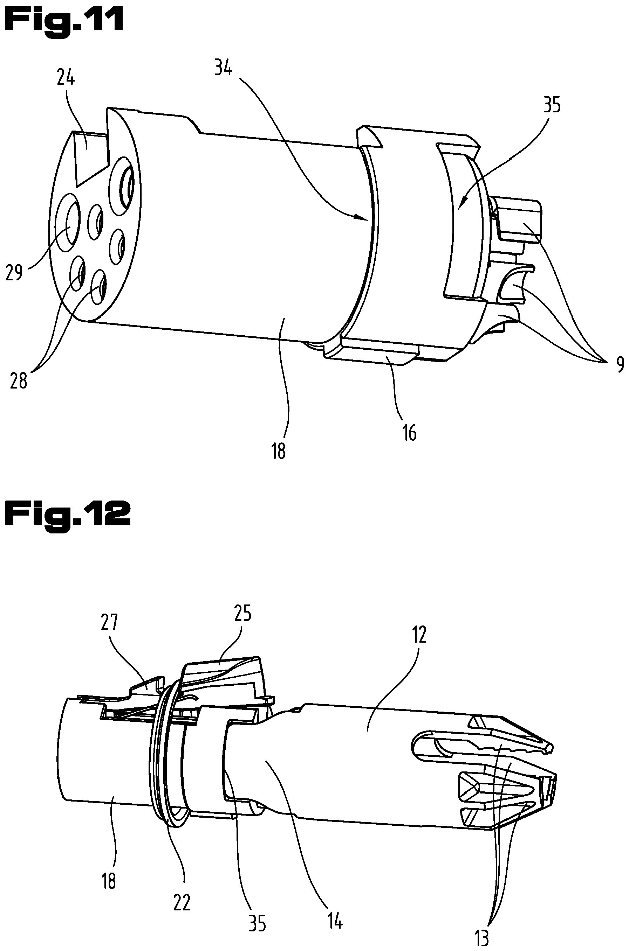

- Fig. 11: eine perspektivische Ansicht eines erfindungsgemässen Kontaktträgers in weiblicher Ausführung für die Kabelkupplung der Fig. 8;
- Fig. 12: eine perspektivische Ansicht einer bei einer XLR-Kabelkupplung wie beispielsweise der Fig. 8 eingesetzten Kontaktträger-Spannteil-Anordnung;
- Fig. 13: eine Ansicht eines erfindungsgemässen Einbausteckers von schräg vorne, in Richtung der Einstecköffnung;
- Fig. 14: eine perspektivische Ansicht des Einbausteckers der Fig. 13 von hinten;
- Fig. 15: eine Ansicht des Einbausteckers der Fig. 13 genau von hinten;
- Fig. 16: einen Längsschnitt durch den Einbaustecker der Fig. 13;
- Fig. 17: eine perspektivische Ansicht einer erfindungsgemässen XLR-Chassisbuchse von schräg vorne, in Richtung der Einstecköffnungen;
- Fig. 18: eine Ansicht des Einbausteckverbinders der Fig. 17 von vorne, aus Richtung der Einstecköffnungen;
- Fig. 19: eine perspektivische Ansicht des entlang der vertikalen Mittelebene geschnittenen Gehäuses der Chassisbuchse der Fig. 17;
- Fig. 20: eine Ansicht des Einbausteckverbinders der Fig. 17 von hinten;
- Fig. 21: einen vertikalen Längsschnitt durch die Chassisbuchse der Fig. 17 in Richtung des Pfeils XIV;
- Fig. 22: einen horizontalen Längsschnitt durch den Einbausteckverbinder der Fig. 17 zu dessen Oberseite hin;
- Fig. 23: einen horizontalen Längsschnitt durch den Einbausteckverbinder der Fig. 17 zu dessen Unterseite hin;
- Fig. 24: eine Ansicht einer weiteren erfindungsgemässen Ausführungsform einer XLR-Einbaubuchse von vorne;
- Fig. 25: den vorderen Gehäuseteil eines komplementären Kabelsteckers für die Einbaubuchse der Fig. 24 von schräg vorne; und
- Fig. 26: eine Ansicht eines XLR-Kontaktträgers von hinten, beispielhaft für einen Einbaustecker oder einen Kabelstecker, mit Bezeichnung der relevanten Abstandsverhältnisse der Kontaktelemente bzw. Verbindungsabschnitte.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäss auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäss auf die neue Lage zu übertragen.

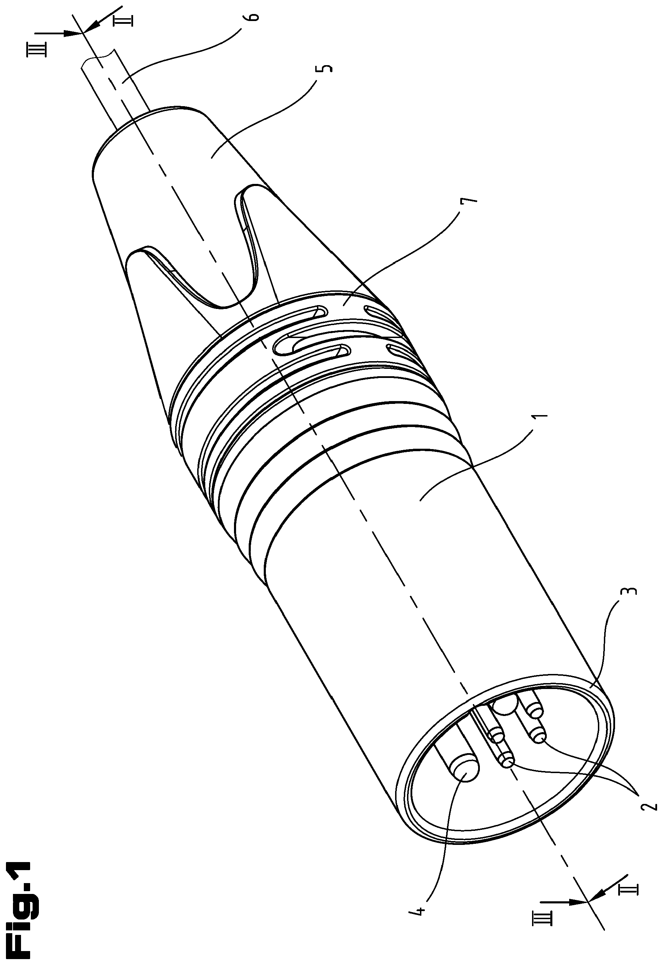

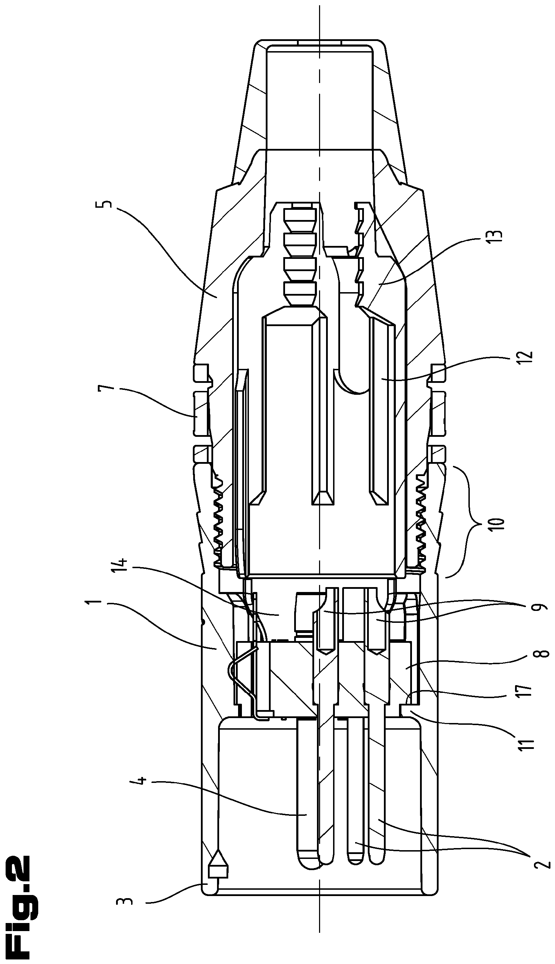

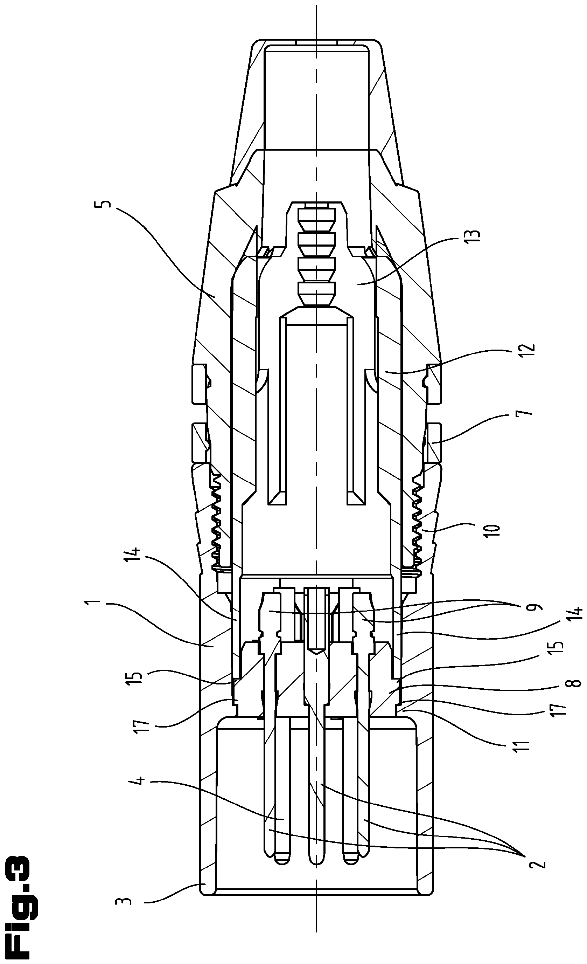

Das erste erfindungsgemässe Ausführungsbeispiel, dargestellt in den Fig. 1 bis 3, ist ein Einbausteckverbinder in einer Form als Kabelstecker, d.h. als männlicher Teil einer Steckverbindung, im XLR-Format für Daten und Leistungsversorgung. Er weist ein Gehäuse 1 auf, das aus einem Kunststoff aber auch aus einem metallischen Werkstoff hergestellt sein kann. Als Kontakte zur Herstellung der Datenverbindung sind hier beispielhaft vier Kontaktstifte 2 im Inneren des Gehäuses 1 gehalten, die in Längsrichtung des Gehäuses 1 gesehen etwas innerhalb des vorderen, buchsenförmigen Randes 3 dieses Gehäuses 1 enden (siehe Fig. 2 und 3). Gleiches gilt für die zwei Kontaktstifte 4 für die Leistungsversorgung, die etwas dicker sind als die Kontakte 2 der Datenverbindung.

Die Kontaktstifte bzw. jede Art von Kontakten kann einteilig oder auch mehrteilig, beispielsweise aus hintereinander angeordneten Segmenten, die einander auch teilweise überlappen können, ausgeführt sein.

Das hintere Ende des Gehäuses 1 ist durch eine Spannhülse 5 verschlossen, durch welche das Daten- und Leistungsversorgungskabel 6 hindurch verläuft und die vom Gehäuse 1 weg vorzugsweise sich konisch verjüngend ausgeführt ist. Zwischen Gehäuse 1 und Spannhülse 5 kann auch ein Zwischenring 7 eingesetzt sein, der in der dargestellten Ausführungsform elastisch ausgeführt ist, aber auch starr sein kann.

Die Kontaktstifte 2, 4 sind im elektrisch isolierenden Basisteil 8 des Kontaktträgers fixiert, der im gegenständlichen Beispiel als separater Bauteil angefertigt und im Inneren des Gehäuses 1 gehalten ist. Der Kontaktträger ist vorzugsweise einstückig ausgeführt. Es sind aber auch Ausführungsformen denkbar, bei welchen der Kontaktträger aus mehreren Segmenten besteht, die hintereinander oder auch in axialer Richtung parallel zueinander angeordnet sein können. Auf der Einsteckseite für den komplementären Steckverbinder ragen die Kontaktelemente 2, 4 von der Vorderseite des Basisteils 7 in einen sich zwischen dem Rand 3 des Gehäuses 1 und dem Basisteil 8 erstreckenden Hohlraum des Gehäuses 1.

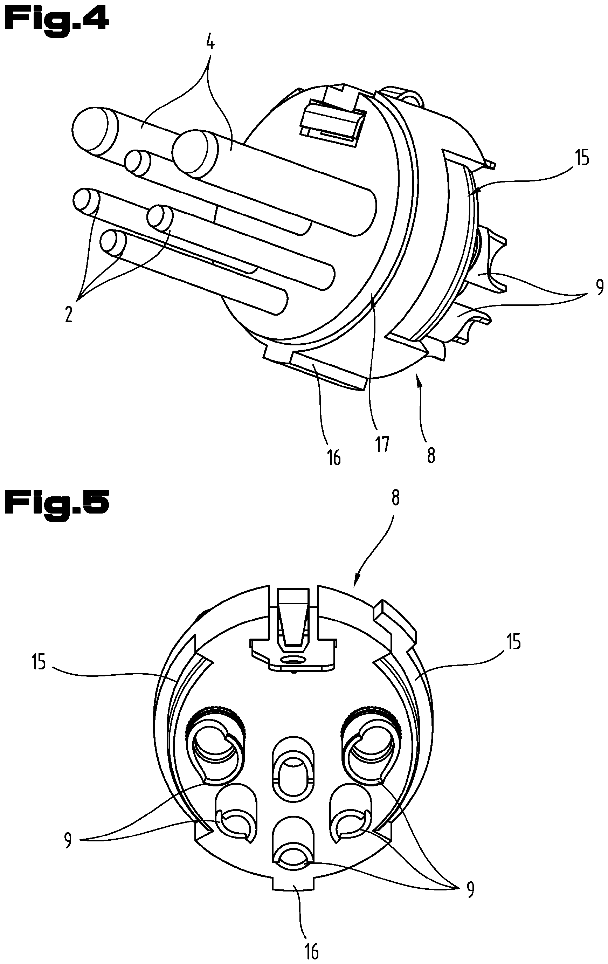

Die Halterung des Basisteils 8 kann wahlweise über Schnappverbindungen, andere kraftschlüssige und/oder formschlüssige Verbindungen, Verschweissung, Verpressung, Verklebung oder Verschraubung erfolgen. Es ist auch möglich, den Kontaktträger, insbesondere aber dessen Basisteil 8, einstückig als integralen Bestandteil des Gehäuses 1 auszuführen. Die Kontaktstifte 2, 4 können im Basisteil 8 eingeklebt, verpresst oder auf andere bekannte Weise fixiert sein. Sie weisen auf ihrem auf der Hinterseite des Basisteils 8 heraus ragenden Ende Verbindungsabschnitte 9 für die Litzen des anzuschliessenden Kabels 6 auf (siehe dazu insbesondere die Fig. 5). Das Gehäuse 1 und die Spannhülse 5 sind über eine Gewindeverbindung 10 lösbar verbunden.

Für die Positionierung des Kontaktträgers im Inneren des Gehäuses 1 kann vorzugsweise an der Innenseite des Gehäuses 1 zumindest ein Positionieranschlag 11 vorgesehen sein, beispielsweise als nach innen ragender Steg ausgeführt, der sich über zumindest einen Teil des Umfangs des Gehäuses 1 erstreckt, allenfalls über mehrere Teilabschnitte des Umfanges. Um den Basisteil 8 gegen den Positionieranschlag 11 anzupressen, ist ein vorzugsweise radial zusammendrückbares und das zentral durch das Gehäuse 1 verlaufende Kabel umfassendes Spannteil 12 vorgesehen, das in zusammengedrücktem Zustand insbesondere mit seinen vorzugsweise drei Klemmabschnitten 13 an der Hinterseite das Kabel 6 klemmt, wenn diese durch die konische Innenwandung der Spannhülse 5 zusammengepresst werden, und dadurch auch eine Zugentlastung darstellt.

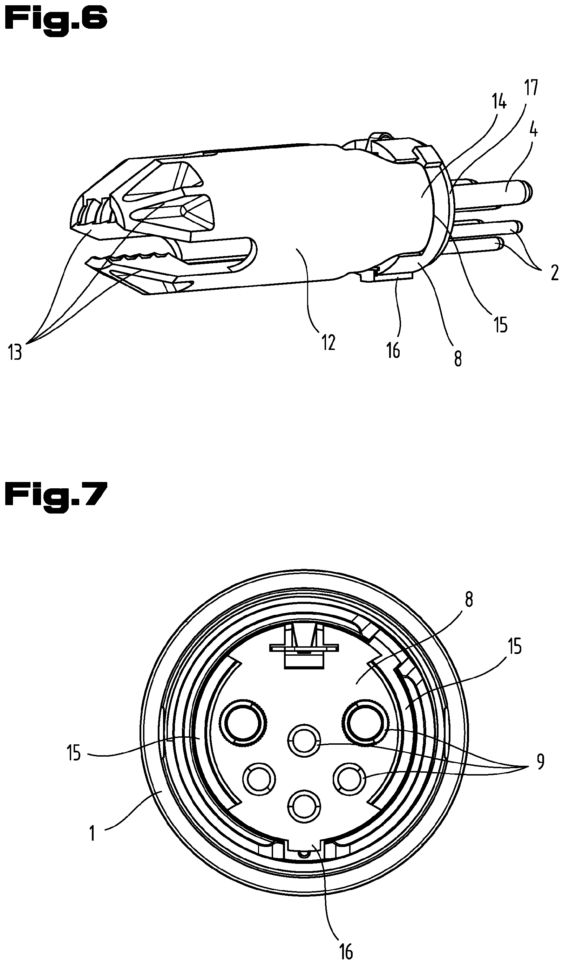

Dieses Spannteil 12 liegt mit an seiner Vorderseite angeordneten Verlängerungen 14 an der Hinterseite des Basisteils 8 an. Während der Herstellung der Gewindeverbindung 10 und insbesondere bei festgezogener Gewindeverbindung 10 von Gehäuse 1 und Spannhülse 5 ist das Spannteil 12 zusammengepresst und wird, ebenfalls wieder durch die Einwirkung der konischen Innenwandung der Spannhülse 5, in Richtung auf das vordere Ende des Gehäuses 1 hin gedrückt, so dass die sich die in Längsrichtung des Spannteils 5 parallel zu dessen Längsmittelachse erstreckenden Verlängerungen 14 den Basisteil 8 und damit auch die Kontaktstifte 2, 4 nach vorne hin mit einer Kraft beaufschlagen und das Gehäuse 1, der Spannteil 12, die Spannhülse 5 und das Kabel 6 miteinander verspannt sind. Bevorzugt ist dabei an der Hinterseite des Basisteils 8 zumindest ein Absatz 15 ausgearbeitet oder sind vorzugsweise mehrere über den Umfang verteilte Absätze 15 ausgearbeitet und bilden eine oder mehrere Schultern aus (siehe Fig. 4), an welchen die Verlängerungen 14 des Spannteils 12 angreifen können, wie in der Fig. 6 zu erkennen ist.

Auch an der Vorderseite des Basisteils 8 können einer oder mehrere Absätze 17 ausgearbeitet sein (siehe Fig. 4), wobei diese Absätze 17 Schultern am Basisteil 8 ausbilden, die bei ganz nach vorne gedrücktem Kontaktträger am Positionieranschlag 11 anliegen und die korrekte Positionierung des Kontaktträgers in Längsrichtung sicherstellen.

Weiter kann vorzugsweise am äusseren Umfang des Basisteils 8 des Kontaktträgers beispielsweise eine Nase oder ein ähnlicher abstehender Teil als Führungselement 16 angeordnet sein. Dieses Führungselement 16 greift vorzugsweise bereits während des Einsetzens des Basisteils 8 in das Gehäuse 1 in eine komplementäre Führungsstruktur an der Innenseite des Gehäuses 1 ein, vorzugsweise eine in Längsrichtung des Gehäuses 1 verlaufende Führungsnut, um derart die genaue relative Ausrichtung von Basisteil 8 und Gehäuse 1 in Umfangsrichtung sicherzustellen.

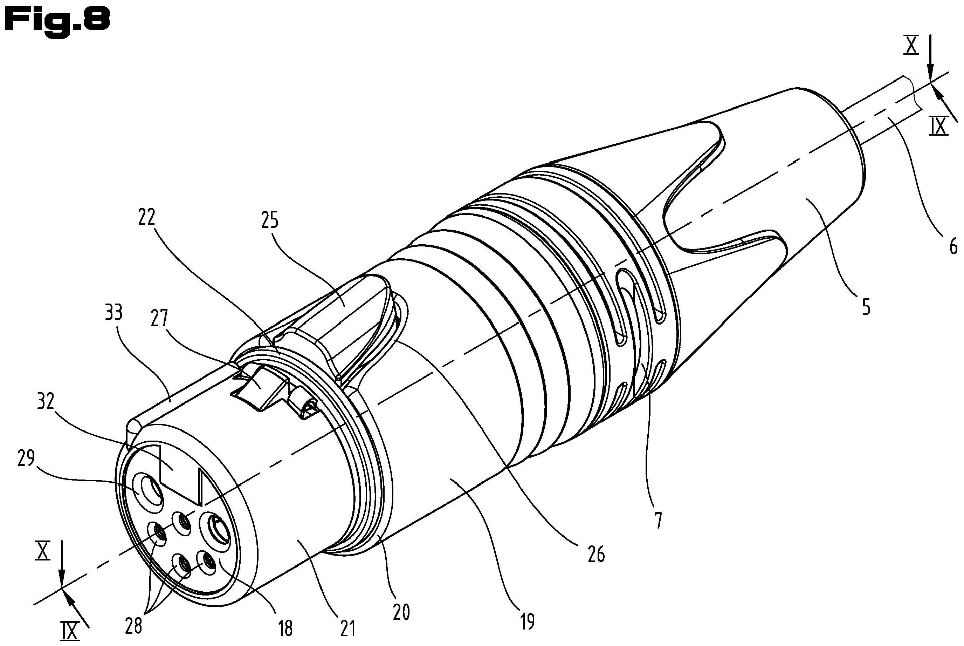

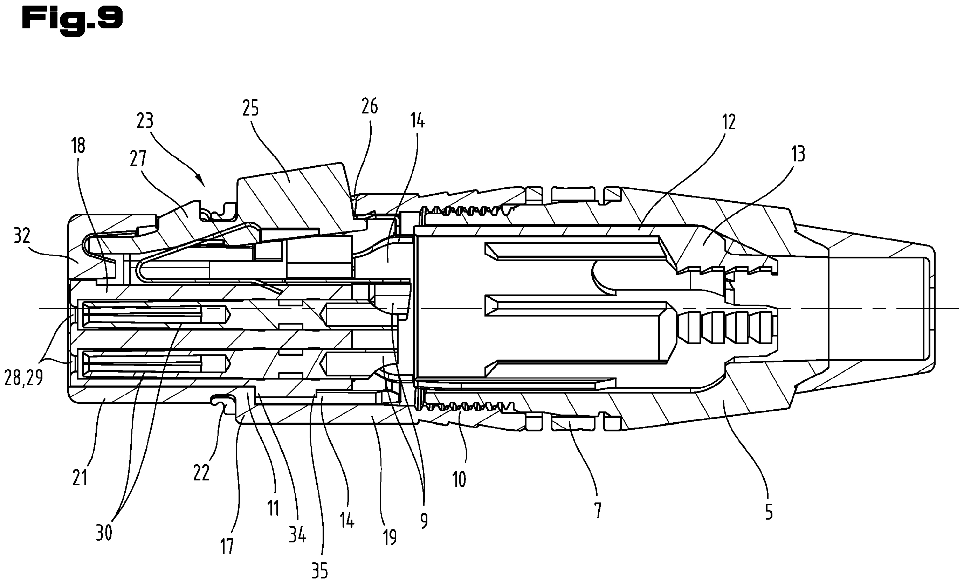

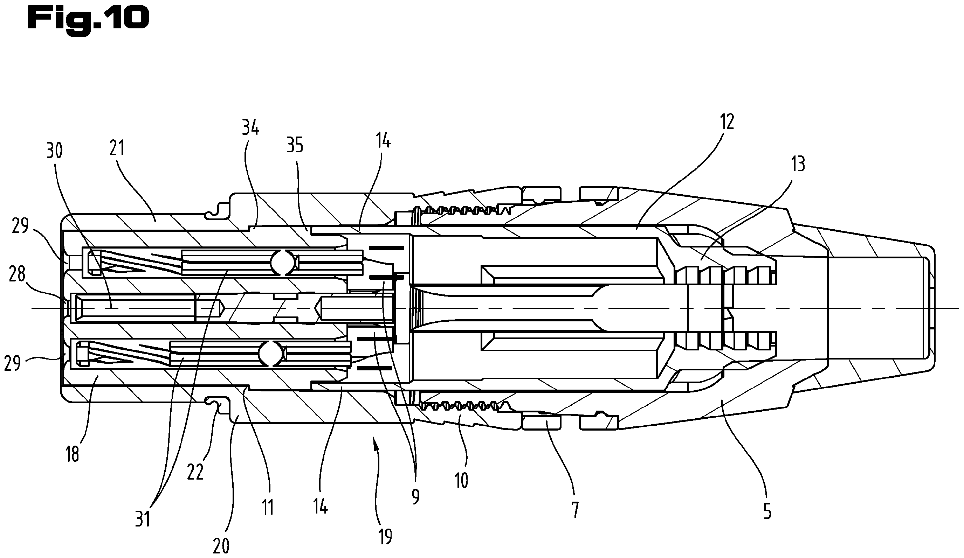

Die in Fig. 8 bis 10 dargestellte Kabelkupplung, also das weibliche Gegenstück zum Kabelstecker der Fig. 1 bis 3, ist vom Prinzip her ähnlich aufgebaut wie der Kabelstecker. Bei dem dargestellten Ausführungsbeispiel ist wieder ein isolierender Basisteil 18 des Kontaktträgers in ein Gehäuse 19 eingesetzt, könnte aber auch einstückig damit ausgeführt sein, vorzugsweise, wenn Gehäuse 1 und Kontaktträger aus isolierendem Kunststoff angefertigt sind. In Metallgehäuse 1 werden vorzugsweise isolierende Kontaktträger eingeschoben.

Das Gehäuse 1 ist in diesem Fall mit einem Absatz 20 versehen, der als Anschlag für den vorderen Rand 3 des komplementären Kabelsteckers oder des Umfangsrandes eines Einbausteckers wirkt, in welche komplementäre Teile der herzustellenden Steckverbindung der vordere Abschnitt 21 mit etwas geringerem Querschnitt als der hintere Abschnitt des Gehäuses 19 eingesteckt werden kann. Im Bereich des Absatzes 20 ist vorzugsweise ein Dämpfungsring 22 angeordnet, der beim Herstellen der Steckverbindung dämpfend wirkt, und vorteilhafterweise auch die beiden zusammengesteckten Steckverbinder im verriegelten Zustand etwas gegeneinander vorspannt. Vorteilhafterweise ist die Kupplung der Fig. 8 mit einer Verriegelungsanordnung 23 für die Steckverbindung mit einem komplementären Stecker versehen, welche in einer Ausnehmung 24 im Basisteil 18 angeordnet ist. Über ein Entriegelungselement 25, welches durch eine Ausnehmung 26 im Gehäuse 19 radial nach aussen ragt, kann die Verriegelung wieder gelöst werden, um die beiden Teile der Steckverbindung zu trennen. Dabei ist die Rastklinke 27 der Verriegelungsanordnung vorzugsweise einstückig mit dem Entriegelungselement 25 ausgeführt.

Anstelle der Kontaktstifte 2, 4 sind in dieser Ausführungsform, bei welcher sich der Kontaktträger, insbesondere der Basisteil 18, bis ganz zur vorderen Stirnseite des Gehäuses 19 erstreckt, ringförmige oder vorzugsweise hohlzylinderförmige Einstecköffnungen 28 für die Kontaktstifte 2 der Datenverbindung und Einstecköffnungen 29 grösseren Durchmessers für die Kontaktstifte 4 der Leistungsversorgung ausgenommen. In diesen Einstecköffnungen 28, 29 sind dann die eigentlichen Kontaktbuchsen 30 für die Datenverbindung und Kontaktbuchsen 31 für die Leistungsversorgung eingeklebt, eingepresst oder auf andere herkömmliche Art fixiert, welchen Buchsen 30, 31 die elektrische Verbindung zu den Kontaktstiften 2, 4 herstellen deren Verbindungsabschnitte 9 zum Kabel 6 wieder an der Hinterseite des Basisträgers 18 herausgeführt sind.

Die Ausnehmung 24 im Basiskörper 18 wird nach vorne hin durch eine in Richtung der Mittelachse ragende Nase 32 an der Stirnseite des Gehäuses 19 abgedeckt. Schliesslich kann als Führungselement 33 zur umfangsmässig korrekten Ausrichtung relativ zum komplementären Gegenstück der Steckverbindung ein Längssteg parallel zur Längsmittelachse des Gehäuses 19 an der Aussenseite des vorderen Abschnittes 21 mit geringerem Durchmesser vorhanden sein.

Vorzugsweise wird gleicher Weise wie oben für den Kabelstecker erläutert die korrekte Positionierung in Längsrichtung des Kontaktträgers über das Zusammenwirken zumindest eines Positionierelementes 11 und eines vorderen Absatzes 34 am Basisteil 18 bewerkstelligt. Das Positionierelement 11 kann als Steg, Anordnung von Stegen oder auch als Querschnittsverengung im Inneren des Gehäuses 19, beim Übergang zum vorderen Abschnitt 21 mit geringerem äusserem Querschnitt ausgebildet sein. Bevorzugt wird die Beaufschlagung des Basiselementes 18 in Richtung der Stirnseite des Gehäuses 19 hin ebenfalls wie oben erläutert über einen Spannteil 12 bewirkt, dessen nach vorne ragende Verlängerungen bevorzugt an einem oder mehreren Absätzen 45 an der Hinterseite des Basisteils 18 angreifen. Für korrekte Positionierung in Umfangsrichtung ist wieder ein Führungselement 16 am Basiskörper 18 vorgesehen und weist das Gehäuse 19 eine komplementäre Führungsstruktur auf.

Die Kontaktträger und Basisteile 8, 18 in der oben erläuterten Ausführung können aber nicht nur für Kabelstecker (Fig. 1) und Kabelkupplungen (Fig. 4) verwendet werden, sondern bei entsprechend komplementärer Gestaltung des Gehäuses 36 auch für Einbaustecker oder Einbaubuchsen zum Einsatz kommen. Alternativ können bei einstückiger Bauweise die zentralen Abschnitte derartiger Bauteile als Kontaktträger im der oben erläuterten Form ausgebildet sein.

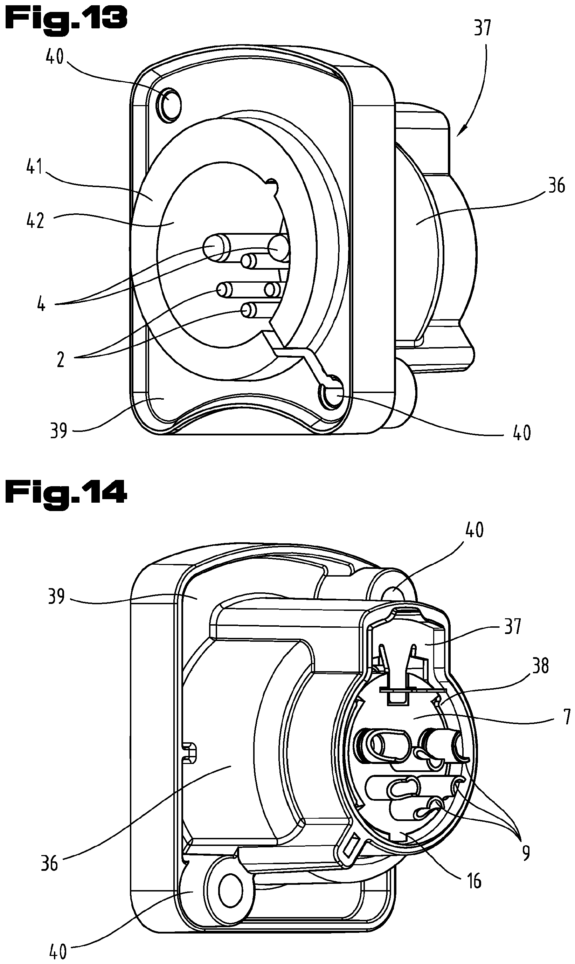

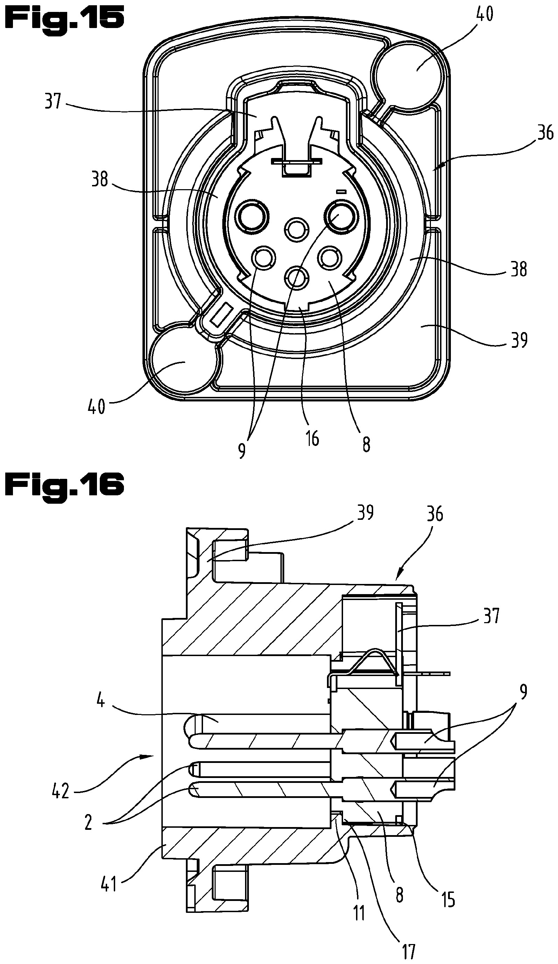

Die Fig. 13 bis 16 stellen als Ausführungsbeispiel einen Einbaustecker im XLR-Format mit vier Kontaktstiften 2 für die Datenkanäle und zwei Kontaktstiften 4 für die Leistungsversorgung dar. Diese sind in einem Basisteil 8 fixiert, der wie in den Fig. 1 bis 6 ausgeführt und nun aber in ein Gehäuse 36 eingeschoben ist, welches für den Einbau in Geräte oder Schalttafeln od. dgl. ausgelegt ist. Der Basisteil 8 wird in diesem Gehäuse 36 durch eine Halteklammer bzw. einen Sperrteil 37 gehalten. Anstelle des Sperrteils 37 kann optional auch ein das Gehäuse 36 nach hinten verschliessender Gehäusedeckel verwendet werden. Wie in Fig. 14 und 15 zu sehen ist, muss der Sperrteil 37 nicht unbedingt die gesamte Öffnung an der Hinterseite des Gehäuses 36 überdecken, sondern es kann der Basisteil 8 mit seiner Hinterseite und den Verbindungsabschnitten 9 der Kontaktstifte 2, 4 aus dem Gehäuse 36 herausragen und durch nach vorne umgebogene Vorsprünge 38 nach vorne hin im Gehäuse 36 gehalten werden. Diese Vorsprünge 38 oder Halteabschnitte greifen dazu an den Absätzen 15 an der Hinterseite des Basisteils 8 an.

Wie bei Chassisbuchsen bzw. Einbausteckern üblich, ist am Gehäuse 36 ein Montageflansch 39 ausgebildet, der typischerweise rechteckige oder runde Umfangsform aufweist und mit Montagebohrungen 40 zumindest an zwei gegenüberliegenden Seiten bezogen auf die Mittelachse des Gehäuses 36 aufweist. Ein umlaufender Steg 41 begrenzt die Einstecköffnung 42 für den komplementären Teil der Steckverbindung. Der Montageflansch 39 könnte auch kreisrund, elliptisch, vieleckig mit beliebig polygonförmigem Umfangsrand oder in ähnlicher Weise gestaltet sein. Alternativ sind auch von einem zylindrisch geformten Gehäuse 36 seitlich abstehende Montageohren mit Bohrungen möglich, wobei zwei einander in Bezug auf die Längsachse des Gehäuses gegenüberliegende Ohren bevorzugt sind.

Wie der Längsschnitt der Fig. 16 durch den Einbaustecker der Fig. 13 bis 15 zeigt, weist auch das Gehäuse 36 an seiner Innenseite zumindest einen als Positionieranschlag 11 wirkenden Steg auf, der über zumindest einen Teil des Umfanges bzw. zumindest über mehrere Teilstücke davon nach innen hin ragt. Das Anpressen des Basisteils 8, so dass dessen Vorderseite, vorzugsweise deren Absätze 17, am Positionieranschlag 11 anliegt, wird im Fall von Einbausteckern oder Einbaubuchsen jedoch nicht durch ein Spannteil 12 bewerkstelligt, sondern durch den Sperrteil 31.

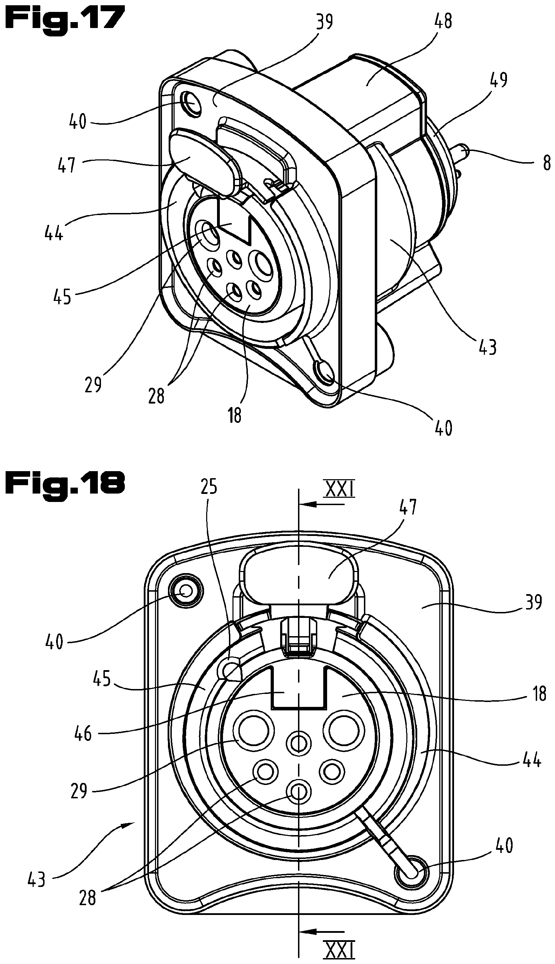

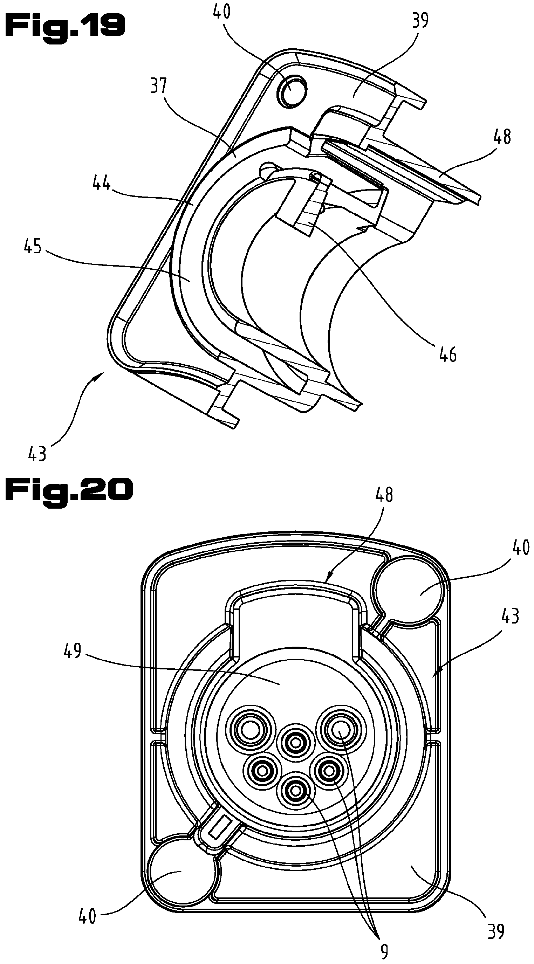

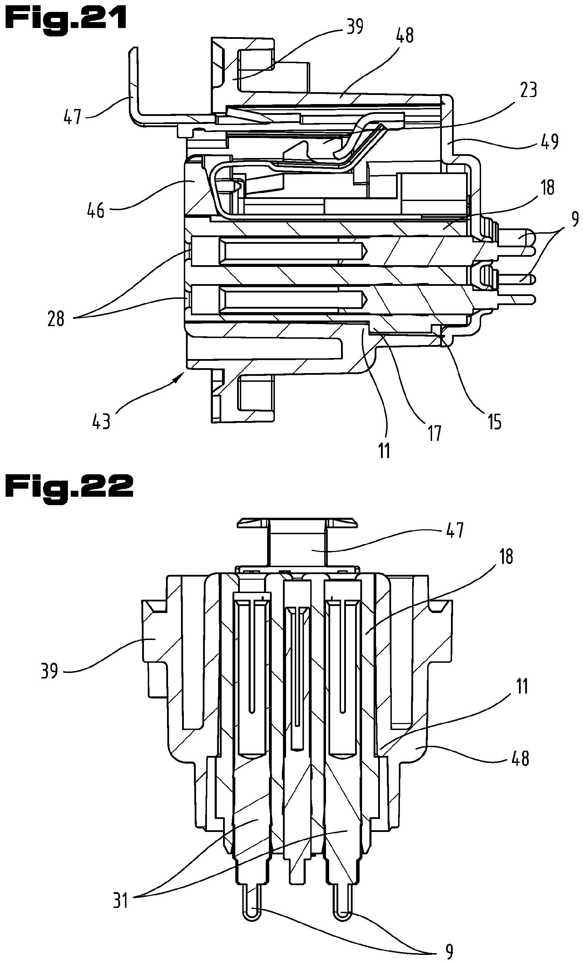

In gleicher Weise wie der Kontaktträger des Kabelsteckers der Fig. 1 bis 3 auch für die Verwendung im Einbaustecker der Fig. 13 bis 16 herangezogen werden kann, kann auch der Kontaktträger der Kupplung der Fig. 8 bis 10 in einer Einbaubuchse oder Chassisbuchse gemäss den Fig. 17 bis 21 verwendet werden. Der männliche als auch der weibliche Kontaktträger sind in allen diesen Fällen vorzugsweise vollkommen gleichartig ausgeführt, so dass nur eine Ausführungsform sowohl für die Verwendung als Kabelsteckverbinder als auch als Einbausteckverbinder bereitgestellt werden muss.

Eine bevorzugte Ausführungsform einer Einbaubuchse ist in den Fig. 17 bis 21 dargestellt. Im Gehäuse 43 mit seinem Positionieranschlag 11 - in gleicher Weise wie oben erläutert ausgeführt - ist der isolierende Basisteil 18 eines Kontaktträgers eingeschoben und über eine Anordnung von Führungselement 16 am Basisteil 18 und Führungsstruktur an der Innenseite des Gehäuses 43 in Umfangsrichtung korrekt ausgerichtet. Ein Steg 44 begrenzt die ringförmige Einstecköffnung 45 für den buchsenförmigen vorderen Gehäuseabschnitt des Kabelsteckers. Eine nach innen ragende Nase 46 deckt das vordere Ende einer Ausnehmung 24 im Basisteil 18 ab, in welchem vorzugsweise eine Verriegelungsanordnung 23 eingesetzt ist, um ein ungewolltes Abziehen des Kabelsteckers zu verhindern. Zum gewollten Lösen der Steckverbindung ist die Verriegelung durch Betätigung eines Entriegelungselementes 47, das aus der Buchse nach vorne hinausragt, wieder lösbar. Eine Ausbuchtung 48 am Gehäuse 43 dient zur Aufnahme der aus der Ausnehmung 24 im Basisteil 18 hinausragenden Abschnitte bzw. Elemente der Verriegelungsanordnung 23 und des Entriegelungselementes 47.

Das Gehäuse 43 der Einbaubuchse ist an der Hinterseite durch einen Gehäusedeckel 49 oder alternativ durch einen Sperrteil entsprechend der Ausführungsform der Fig. 14 verschlossen, der nun die gesamte Öffnung der Hinterseite abdeckt und mit dem Gehäuse 43 verschweisst, verklebt oder sonst auf andere herkömmliche Weise formschlüssig und/oder kraftschlüssig verbunden ist. Daraus ragen nur die hinteren Endabschnitte 9 der Kontaktbuchsen 30, 31 heraus. Der Gehäusedeckel 49 liegt an der Hinterseite des Basisteils 18 an, kann allenfalls auch alternativ oder zusätzlich noch an den Absätzen 15 an der Hinterseite des Basisteils 18 angreifen, und beaufschlagt den Basisteil 18 nach vorne hin mit einer Anpresskraft auf den Positionieranschlag 11 hin. Auch eine umfangsmässig korrekte Ausrichtung kann - wie oben erläutert - durch eine Anordnung mit dem Führungselement 16 am Basisteil 18 und einer Führungsstruktur im Inneren des Gehäuses 43 vorhanden sein. Im komplett eingeschobenen Zustand ist auch der Eingriff der Nase 46 in die Ausnehmung 24 des Basisteils 18 des Kontaktträgers ein weiteres Hilfsmittel zur korrekten umfangsmässigen Ausrichtung und gegebenenfalls auch der Positionierung in Längsrichtung des Gehäuses 43.

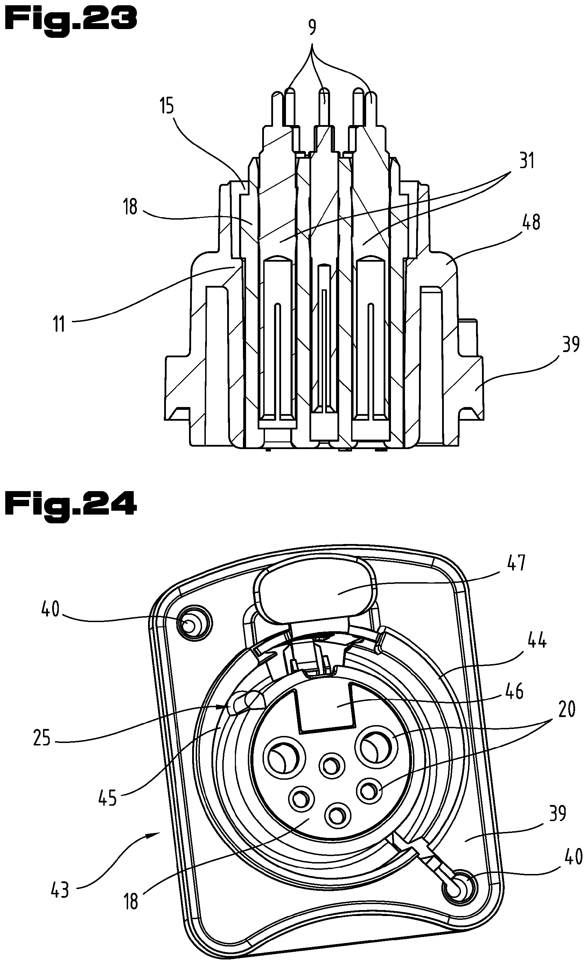

Auch an der Einbaubuchse kann bevorzugt an der Aussenseite des Kontaktträgers oder am inneren Gehäuseabschnitt, in welchem der Basisteil 18 des Kontaktträgers eingeschoben ist, ein sich parallel zur Längsachse erstreckender Führungssteg 25 (siehe Fig. 24) vorhanden sein. Beim Einstecken eines Kabelsteckers, bei welchem das vordere Ende des Gehäuses 1 mit einer Führungsnut 26 in Längsrichtung des Gehäuses 1 versehen ist, wird mit dieser Anordnung die korrekte relative Ausrichtung der Kontaktstifte 2, 4 und der Einstecköffnungen 28, 29 sichergestellt.

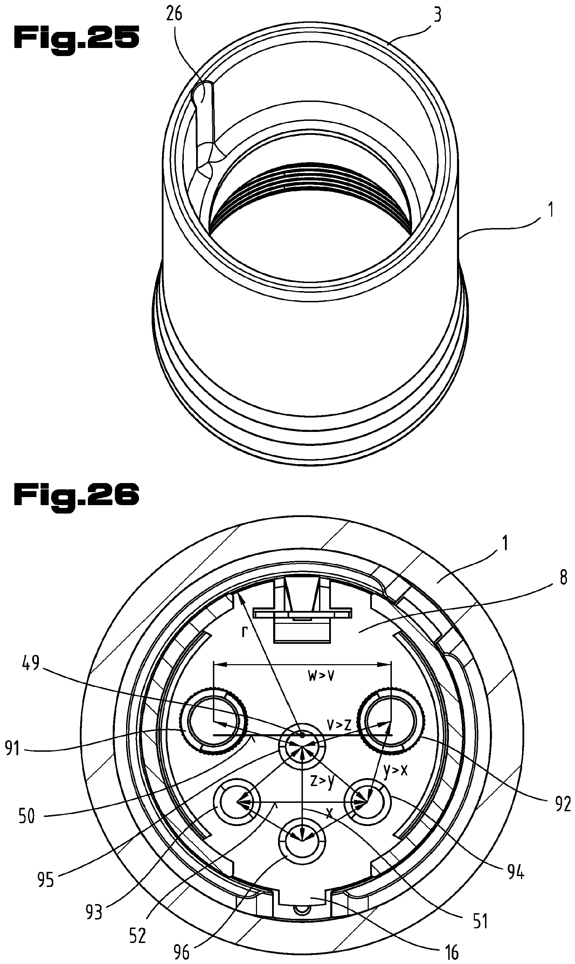

In Fig. 25 ist ein Gehäuse 1 für einen Kabelstecker dargestellt, das zur Herstellung einer Steckverbindung mit einer Einbaubuchse entsprechend der Fig. 24, aber auch zur Verbindung mit einer Kabelkupplung entsprechend der Fig. 4 ausgelegt ist. Dazu weist das Gehäuse 1, an dessen hinterem Ende der innenliegende Gewindeabschnitt für die Gewindeverbindung 10 mit der Spannhülse 5 zu erkennen ist, eine Längsnut auf, die sich parallel zur Längsmittelachse des Gehäuses 1 über eine Länge erstreckt, derart, dass der Kabelstecker ausreichend tief in das Gehäuse 30 der Einbaubuchse eingesteckt werden kann bzw. dass der gesamte Abschnitt 21 des Gehäuses 19 der Kupplung in den vorderen Abschnitt des Gehäuses 1 des Kabelsteckers eingeführt werden kann. Die Lage des Steges und der Nut sind natürlich derart gewählt, dass die relativen Positionen der Kontaktstifte 2, 4 und der Einstecköffnungen 28, 29 übereinstimmen, wenn der Steg in die Nut eingeschoben werden kann.

Die Kontaktstifte 2, 4 bzw. Kontaktbuchsen 30, 31 bilden Daten bzw. Energiekanäle aus, über die mit unterschiedlichen Spannungen und/oder Leistungen und/oder Frequenzen analoge und/oder digitale Daten oder Signale oder Energie übermittelt werden können. Bei der hier erläuterten 2 + 4 Variante der Steckverbinder in XLR-Form ist zumindest ein Paar von ersten Kontaktelementen, d.h. von jeweils zwei Kontaktstiften 4 bzw. Kontaktbuchsen 31, für die Energieübertragung vorgesehen und sind zumindest zwei Paare von zweiten Kontaktelementen, nämlich jeweils zwei Kontaktstiften 2 bzw. Kontaktbuchsen 30, für die analoge und/oder digitale Datenübertragung vorgesehen. Der Basisteil 8, 18 des Kontaktträgers ist bevorzugt im Wesentlichen als Scheibe oder Zylinder ausgebildet, wobei die Mittelachse der Scheibe bzw. des Zylinders und die Kontakteelemente 2, 4, 30, 31 im Wesentlichen parallel angeordnet sind. Bevorzugt sind die Kontaktelemente 2, 4, 30, 31 auch parallel zur Mittelachse des Basisteils 8, 18 und zur Längsachse des Gehäuses 1, 19, 36, 43 orientiert. Die Verbindungsabschnitte 9 der Kontaktelemente 2, 4, 30, 31 sind an der einem komplementären Steckverbinder gegenüberliegenden Rückseite des Basisteils 8, 18 nach bei Kabelsteckverbindern in den hinteren Teil des Gehäuses 1, 19 oder bei Einbausteckverbindern an die Aussenseite des Gehäuses 36, 43 geführt. Es ist aber als unabhängige Weiterbildung auch möglich, dass die Kontaktelemente 30, 31 auch durch eine Rückwand des Gehäuses 36, 43 des Einbausteckverbinders oder einen hinteren Gehäusedeckel oder eine sonstige hintere Abdeckung vorzugsweise parallel zur Längsmittelachse des Gehäuses 36, 43 nach aussen geführt sind.

Um einerseits ausreichend Platz für beispielsweise eine Verriegelungsanordnung für die Steckverbindung zur Verfügung zu stellen, dennoch aber einen ausreichenden Abstand zwischen den einzelnen Kontaktelementen 2, 4, 30, 31 zu gewährleisten, sind - wie in Fig. 26 unter Bezugnahme auf die hier sichtbaren Verbindungsabschnitte 91 bis 96 graphisch erläutert ist - die Paare von ersten und zweiten Kontakteelementen 2, 4 bzw. 22 bzw. deren Verbindungsabschnitte 91 bis 96 in einem Zylindersegment mit einer Segmenthöhe von zumindest gleich einem Zylinderradius r, aber bevorzugt mehr als einem Zylinderradius r, angeordnet. Als Bezugspunkt für die Lage der Kontaktelemente Verbindungsabschnitte 91 bis 96 wird dabei deren Mittelachse herangezogen. Damit steht im anderen Zylindersegment genug Platz zur Verfügung, und kann darin eine sich über zumindest einen Teil der Höhe des Zylinders bzw. der Scheibe erstreckende Ausnehmung 42 ausgearbeitet sein.

Die Kontaktstifte 4 und die komplementären Kontaktbuchsen 22 der Paare von zweiten Kontaktelementen für die analoge und/oder digitale Datenübertragung sind für eine Spannungsebene einer Kleinspannung geeignet, die bei einer Wechselspannung ≤ 50 V und bei oberschwingungsfreier Gleichspannung ≤ 120 V beträgt. Bevorzugt liegt das Spannungsniveau in einem Bereich von 0,5 V bis 25 V Wechsel- oder Gleichspannung. Die Kontaktstifte 2 und Kontaktbuchsen 22 des zumindest einen Paares von ersten Kontaktelementen für die Energieübertragung sind für den Einsatz in der Spannungsebene einer Niederspannung, also einer Wechselspannung > 50 V bis ≤ 1000 V und einer oberschwingungsfreien Gleichspannung > 120 V bis ≤ 1500 V ausgelegt. Bevorzugt ist die Konstruktion und Auslegung auf einen Spannungsbereich zwischen 200 und 500 V Wechselspannung bzw. 200 V bis 300 V oberschwingungsfreier Gleichspannung ausgerichtet.

Für eine Signalübertragung, welche durch die Leistungsübertragung in geringstmöglichem Ausmass gestört ist, ist eine räumlich getrennte Anordnung der Kontakte für die Leistungsübertragung von jenen der Signal- bzw. Datenübertragung vorgesehen. Eine für die möglichst geringe gegenseitige Beeinflussung der über die Kontaktelemente 2, 4, 30, 31 laufenden Übertragungen besonders vorteilhafte Konfiguration ist auch durch eine spezielle, nachfolgend noch genauer erläuterte Anordnung der jeweiligen Paare von Kontaktelementen 2, 4, 30, 31 gekennzeichnet. So ist für die ungestörte Signalübertragung die Anordnung der Kontaktelemente 2, 4, 30, 31 und deren Verbindungsabschnitte 91 bis 96 derart gestaltet, dass diese in einer zur Längsmittelachse 49 der Kontaktelemente und des Kontaktträgers verlaufenden Ebene verteilt angeordnet sind.

Gedachte erste Abstandslinien 50 zwischen den Kontaktelementen bzw. Verbindungsabschnitten 91, 92 der Paare von ersten Kontaktelementen für die Leistungsübertragung sind dabei frei von Überschneidungen mit allen gedachten zweiten Abstandslinien 51, 52 zwischen den Kontaktelementen bzw. Verbindungsabschnitten 93 bis 96 der zweiten Paare von Kontaktelementen für die Datenübertragung. Die Abstandslinien sind dabei definiert als die kürzesten Geraden zwischen den Mittelachsen der zwei zusammengehörigen Kontaktelemente jedes Paares 91 und 92, 93 und 94, 95 und 96 von Kontaktelementen.

Beispielsweise ist in Fig. 23 klar zu sehen, dass die Abstandslinie 50 zwischen den Verbindungsabschnitten 91 und 92 des Paares erster Kontaktelemente, welche durch die Längsmittelachse 49 des Basisteils 7 hindurch verläuft, keine Überschneidung mit der senkrecht dazu und radial zur Längsmittelachse 49 verlaufenden Abstandslinie 51 des radial angeordneten Paares von Verbindungsabschnitten 95, 96 zweiter Kontaktelemente hat. Auch mit der Abstandslinie 52 des weiteren Paares von Verbindungsabschnitten 93, 94 der anderen zweiten Kontaktelemente gibt es keine Überschneidung, verläuft diese Abstandslinie 52 ja senkrecht zur Abstandslinie 51 und damit parallel zur Abstandslinie 50. Hier wie in weiterer Folge gelten die Verhältnisse für Kontaktelemente genauso für deren Verbindungsabschnitte und umgekehrt.

Die Abstandslinien 51, 52 der Paare von Verbindungsabschnitten 93 bis 96 für zweite Kontaktelemente 4, 22 schneiden einander, und zwar vorzugsweise in einem rechten Winkel. Dabei sind die Kontaktelemente 4, 22 und deren Verbindungsabschnitte 93 bis 96 derart angeordnet, dass eine Abstandslinie 51 die Längsmittelachse 49 des Kontaktträgers schneidet und die andere Abstandslinie 52 senkrecht zu dieser und vorzugsweise in der der Längsmittelachse 49 des Kontaktträgers abgewandten Hälfte der Abstandslinie 51 verläuft.

Um die störungsfreie Datenübertragung trotz Kombination mit der Leistungsversorgung zu gewährleisten, ist weiters bevorzugt der Abstand t, u bzw. w zwischen den Kontaktelementen 2, 4, 30, 31 und Verbindungsabschnitten 91 bis 96 zusammengehöriger Paare grösser ist als jeder Abstand v, x, y, z zu einem Kontaktelement bzw. einem Verbindungsabschnitt eines anderen Paares. Besonders bevorzugt ist dabei eine Anordnung, bei welcher der Abstand y zwischen einem ersten Verbindungsabschnitt 92, hier einem der Kontakte für die Leistungsversorgung, und dem nächstliegenden Verbindungsabschnitt 94 eines Paares von zweiten Kontakten für die Datenübertragung kleiner ist als der Abstand v des ersten Verbindungsabschnittes 94 zum nächstliegenden Verbindungsabschnitt der gleichen Gruppe von Kontakten, d.h. vorzugsweise also dem zweiten Verbindungsabschnitt 91 des zusammengehörigen Paares von Kontakten für die Leistungsversorgung. Dabei ist aber gleichzeitig darauf zu achten, dass der Abstand z zwischen Verbindungsabschnitten 94 und 95 nicht zusammengehöriger Paare von zweiten Kontaktelementen für die Datenübertragung zwischen den vorgenannten Abstandswerten v und y liegt.

Die bestmögliche Sicherheit für eine ungestörte Datenübertragung bietet eine Anordnung, die zusätzlich zu den oben erläuterten Merkmalen eine charakteristische Impedanz zwischen den einander nächstliegenden Kontakten unterschiedlicher Paare von Kontakten von grösser als 50 Ω, vorzugsweise von grösser als 80 Ω, aufweist. Dazu werden einerseits die Abstände zwischen diesen Kontakten bzw. Verbindungsabschnitten und die Materialien mit ihren speziellen Permittivität, insbesondere im Hinblick auf die Dielektrizitätswerte, aufeinander abgestimmt, wobei diese Verhältnisse insbesondere für die kleinsten auftretenden Abstände gelten sollen - in Fig. 26 wäre das der Abstand zwischen den Verbindungsabschnitten 94 und 96, die beide unterschiedlichen Paaren von zweiten Kontaktelementen angehören.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

**Bezugszeichenaufstellung**

| | | | |
|---|---|---|---|
| | | 36 | Gehäuse |
| 1 | Gehäuse | 37 | Sperrteil |
| 2 | Kontaktstifte | 38 | Halteabschnitt |
| 3 | Rand | 39 | Montageflansch |
| 4 | Kontaktstifte | 40 | Montagebohrungen |
| 5 | Spannhülse | | |
| 6 | Kabel | 41 | Steg |
| 7 | Zwischenring | 42 | Einstecköffnung |
| 8 | Basisteil männlich | 43 | Gehäuse |
| 9 | Verbindungsabschnitt | 44 | Steg |
| 10 | Gewindeverbindung | 45 | Einstecköffnung |
| 11 | Positionieranschlag | 46 | Nase |
| 12 | Spannteil | 47 | Entriegelungselement |
| 13 | Klemmabschnitt | 48 | Ausbuchtung |
| 14 | Verlängerung | 49 | Längsmittelachse |
| 15 | Absatz hinten | 50 | Abstandslinie |
| 16 | Führungselement | 51 | Abstandslinie |
| 17 | Absatz vorne | 52 | Abstandslinie |
| 18 | Basisteil weiblich | 91 | Verbindungsabschnitt |
| 19 | Gehäuse | 92 | Verbindungsabschnitt |
| 20 | Absatz | 93 | Verbindungsabschnitt |
| 21 | Dünnerer Abschnitt | 94 | Verbindungsabschnitt |
| 22 | Dämpfungsring | 95 | Verbindungsabschnitt |
| 23 | Verriegelungsanordnung | 96 | Verbindungsabschnitt |
| 24 | Ausnehmung Basisteil | | |
| 25 | Entriegelungselement | | |
| 26 | Ausnehmung Gehäuse | | |
| 27 | Rastklinke | | |
| 28 | Einstecköffnungen | | |
| 29 | Einstecköffnungen | | |
| 30 | Kontaktbuchsen | | |
| 31 | Kontaktbuchsen | | |
| 32 | Nase | | |
| 33 | Führungselement | | |
| 34 | Absatz vorne | | |
| 35 | Absatz hinten | | |

## Patentansprüche

1. Kontaktträger für elektrische Steckverbinder mit einem den Kontaktträger aufnehmenden bzw. umfassenden Gehäuse (1, 19, 36, 43), mit einem elektrisch isolierenden Basisteil (8, 18), mit zumindest einem Paar von ersten elektrischen Kontakten (4, 31) für die Energieübertragung und mehreren Paaren von zweiten elektrischen Kontakten (2, 30) für die Datenübertragung, wobei die Kontakte im Basisteil gehalten und in einer zur Längsachse der Kontaktelemente und des Kontaktträgers verlaufenden Ebene verteilt angeordnet sind und vorzugsweise parallel zueinander und zur Längsachse (49) des Kontaktträgers verlaufen, **dadurch gekennzeichnet, dass** gedachte erste Abstandslinien (50) zwischen den Kontakten (91, 92) der Paare von ersten Kontakten frei von Überschneidungen mit gedachten zweiten Abstandslinien (51, 52) zwischen den Kontakten der Paare (93, 94 bzw. 95, 96) von zweiten Kontakten sind.

2. Kontaktträger nach Anspruch 1, **dadurch gekennzeichnet, dass** die zweiten Abstandslinien (51, 52) einander schneiden, vorzugsweise in einem rechten Winkel, wobei vorzugsweise eine Abstandslinie (51) die Längsmittelachse (49) des Kontaktträgers schneidet und die andere Abstandslinie (52) senkrecht zu dieser und vorzugsweise in der der Längsmittelachse (49) des Kontaktträgers abgewandten Hälfte der ersten Abstandslinie (51) verläuft.

3. Kontaktträger nach Anspruch 2, **dadurch gekennzeichnet, dass** der Abstand (t, u, w) zwischen den Kontakten (91 und 92; 93 und 94; 95 und 96) zusammengehöriger Paare grösser ist als jeder Abstand (v, x, y, z) zu einem Kontakt eines anderen Paares.

4. Kontaktträger nach Anspruch 2, **dadurch gekennzeichnet, dass** der Abstand (y) zwischen einem Kontakt (92) eines der ersten Paare von Kontakten und dem nächstliegenden Kontakt (94) eines Paares von zweiten Kontakten kleiner ist als der Abstand (v) des ersten Kontaktes (94) zum nächstliegenden Kontakt (91) der gleichen Gruppe von Kontakten, und dass der grösste Abstand (z) zwischen Kontakten (94 und 95) nicht zusammengehöriger Paare zweiter Kontakte zwischen den vorgenannten Abstandswerten (v, y) liegt.

5. Kontaktträger nach einem der Ansprüche 1 bis 4, **dadurch gekennzeichnet, dass** der kleinste Abstand (x) zwischen den Kontakten, vorzugsweise zwischen den nächstliegenden Kontakten (94 und 96) unterschiedlicher Paare zweiter Kontakte derart gross ist, dass die charakteristische Impedanz zwischen diesen Kontakten grösser als 50 Ω ist, vorzugsweise grösser als 80 Ω ist.

6. Kontaktträger nach einem der Ansprüche 1 bis 5, **dadurch gekennzeichnet, dass** die zweiten Kontakte (2, 30) für die analoge und/oder digitale Datenübertragung in einer Spannungsebene einer Kleinspannung, die bei einer Wechselspannung ≤ 50 V und bei oberschwingungsfreier Gleichspannung ≤ 120 V beträgt ausgelegt sind, bevorzugt in einem Bereich von 0,5 V bis 25 V Wechsel- oder Gleichspannung, und/oder dass die ersten Kontakte (4, 31) für die Energieübertragung für den Einsatz in der Spannungsebene Niederspannung, also einer Wechselspannung > 50 V bis ≤ 1000 V und einer oberschwingungsfreien Gleichspannung > 120 V bis ≤ 1500 V, bevorzugt jedoch in einem Spannungsbereich zwischen 200 und 500 V Wechselspannung bzw. 200 V bis 300 V oberschwingungsfreier Gleichspannung, ausgelegt sind.

7. Kontaktträger nach einem der Ansprüche 1 bis 6, **dadurch gekennzeichnet, dass** am äusseren Umfang des Basisteils (8, 18) zumindest ein Führungselement (16) angeordnet und zum Eingriff in eine komplementäre Führungsstruktur am aufnehmenden Gehäuse (1, 19, 36, 43) gestaltet ist.

8. Kontaktträger nach einem der Ansprüche 1 bis 7, **dadurch gekennzeichnet, dass** an der Rückseite des Basisteils (8, 18) über zumindest einen Teil des Umfanges eine Schulter (15) ausgebildet ist, und dass vorzugsweise auch an der Vorderseite des Basisteils (8, 18) über zumindest einen Teil des Umfanges eine Schulter (17) ausgebildet ist.

9. Kontaktträger nach einem der Ansprüche 1 bis 8, dessen Basisteil (8, 18) im Wesentlichen als Scheibe oder Zylinder ausgebildet ist, wobei die Mittelachse (49) der Scheibe bzw. des Zylinders und die Kontakte (2, 4, 30, 31) im Wesentlichen parallel angeordnet sind, **dadurch gekennzeichnet, dass** die Kontakte (2, 4, 30, 31) in einem Zylindersegment mit einer Segmenthöhe von mehr als einem Zylinderradius (r) angeordnet sind, und im anderen Zylindersegment eine sich über zumindest einen Teil der Höhe des Zylinders bzw. der Scheibe erstreckende Ausnehmung (24) ausgearbeitet ist.

10. Elektrischer Steckverbinder, mit einem Gehäuse, mit einem im Inneren des Gehäuses (1, 19, 36, 43) gehaltenen Kontaktträger, umfassend einen elektrisch isolierenden Basisteil (8, 18) und zumindest ein Paar von ersten elektrischen Kontakten (4, 31) für die Energieübertragung und mehreren Paaren von zweiten elektrischen Kontakten (2, 30) für die Datenübertragung, **dadurch gekennzeichnet, dass** der Kontaktträger gemäss einem der Ansprüche 1 bis 9 ausgeführt ist.

11. Steckverbinder nach Anspruch 10, **dadurch gekennzeichnet, dass** an der Innenseite des Gehäuses (1, 19, 36, 43) zumindest ein Positionieranschlag (11) und eine Führungsstruktur vorgesehen sind, wobei der Kontaktträger bei geschlossenem Gehäuse vorzugsweise mit einer Schulter an der Vorderseite des Basisteils (8, 18) am Positionieranschlag (11) anliegt und zumindest bei geschlossenem Gehäuse (1, 19, 36, 43), vorzugsweise bereits während des Einsetzens in das Gehäuse, das am äusseren Umfang des Basisteils (8, 18) angeordnete Führungselement (16) in die Führungsstruktur eingreift.

12. Steckverbinder nach Anspruch 11, umfassend ein radial zusammendrückbares und ein an die Kontakte angeschlossenes Kabel (6) umfassendes Spannteil (12), das in zusammengedrücktem Zustand das Kabel (6) klemmt, **dadurch gekennzeichnet, dass** das Spannteil (12) mit an seiner Vorderseite angeordneten Verlängerungen (14) an der Schulter (15) an der Hinterseite des Basisteils (8, 18) des Kontaktträgers angreift und bei geschlossenem Gehäuse (1, 19) in Richtung Einstecköffnung mit einer Kraft beaufschlagt.

13. Steckverbinder nach Anspruch 12, **dadurch gekennzeichnet, dass** das Gehäuse (1, 19) zur Herstellung einer Gewindeverbindung (10) mit einer Spannhülse (5) ausgelegt ist, wobei bei festgezogener Gewindeverbindung (10) die Spannhülse (5) das Spannteil (12), das Gehäuse (1, 19) und das Kabel (6) miteinander verspannt sind.

14. Steckverbinder nach Anspruch 11, **dadurch gekennzeichnet, dass** ein Sperrteil oder Gehäusedeckel (37, 49) die Hinterseite des Gehäuses (36, 43) verschliesst und in geschlossenem und fixiertem Zustand an der Hinterseite des Kontaktträgers, vorzugsweise des Basisteils (8, 18) anliegt und in Richtung Einstecköffnung (36, 45) mit einer Kraft beaufschlagt, wobei vorzugsweise das Gehäuse (36, 43) und ein Gehäusedeckel (40) luftdicht miteinander verbunden sind.

15. Steckverbinder nach einem der Ansprüche 10 bis 14, mit einem Kontaktträger gemäss Anspruch 9, **dadurch gekennzeichnet, dass** eine manuell mittels eines Entriegelungselementes (25, 47) lösbare Verriegelungsanordnung (23) in der Ausnehmung (24) des Basisteils (18) eingesetzt ist.
